Europäisches Patentamt

European Patent Office

Office européen des brevets

(19)

(11) Publication number: **0 287 906 B1**

# EUROPEAN PATENT SPECIFICATION

(12)

(45) Date of publication of patent specification: **26.02.92**

(51) Int. Cl.⁵: **A47J 31/44**, A47J 27/04, A47J 43/12

(21) Application number: **88105594.1**

(22) Date of filing: **08.04.88**

(54) **Apparatus for quick emulsification and heating of liquids.**

(30) Priority: **21.04.87 IT 820187**

(43) Date of publication of application:
**26.10.88 Bulletin 88/43**

(45) Publication of the grant of the patent:
**26.02.92 Bulletin 92/09**

(84) Designated Contracting States:
**AT BE CH DE ES FR GB GR LI LU NL SE**

(56) References cited:
**DE-A- 3 538 041**
**DE-C- 502 826**
**DE-C- 519 365**
**US-A- 2 288 063**

(73) Proprietor: **BREVETTI GAGGIA S.p.A.**

**I-20087 Robecco sul Naviglio(IT)**

(72) Inventor: **Bonanno, Francesco**
**via C. da Sorrento 142**
**Crosia Cosenza(IT)**

(74) Representative: **Klausner, Erich et al**
**c/o Ufficio Internazionale Brevetti Ing. C.**
**Gregorj S.p.A. Via Dogana 1**
**I-20123 Milano(IT)**

## Description

This invention relates to a device according to the preamble of Claim 1, the purpose of which is to heat, emulsify, swirl and thicken liquids.

A device of this type is already known from DE-A-3538041 which comprises two concentric tubes. The inner tube, having one end tightly connected to a steam jet, has at the other end a nozzle forming the outlet of the steam. This inner tube is surrounded by an outer tube slightly longer than the inner tube so as to form a small turbulence chamber having two passages through which the liquid to be whipped is sucked. In this small chamber the air coming from an upper slot, in comunication with the atmosphere and provided at the upper end of the outer tube, is mixed with the liquid to be emulsified and the emulsion goes out from the turbulence chamber through a lower restricted outlet in the outer tube. A first drawback of this device is that the action of suction of the air from the upper slot, caused by the outflow of the steam from the steam nozzle. is reduced due to the great distance between the air suction slot and the steam nozzle. A second drawback is due to the reduced volume of the turbulence chamber whereby the quantity of the liquid treated is small. In addition since the liquid to be treated must be sucked through two small side holes into the turbulence chamber, a resistance to flow is experienced, with a consequent reduction of the action of emulsion further emphasized by the presence of a restricted lower outlet for the emulsion.

The device according to this invention, applied to the conventional steam lances or jets of expresso coffee machines. both of professional type used in bars and of household type, comprises the features of the characterising portion of Claim 1, including a short steam head, provided with a steam nozzle, surrounded by a single tube terminating with a full open outlet which cause no restriction in the flow of the emulsion. The passage for the suction of air is arranged at the upper part of the single tube near the the steam nozzle whereby the action of air suction is improved. The volume of the chamber in which the emulsion airliquid is performed corresponds to the inner volume of the entire tube itself. In this device the inflow of the liquid to be treated and the outflow of the emulsified liquid is free since it occurs through a full open passage at the lower part of the single tube in which two stream are performed, one directed downwards and another directed upwards.

A further embodiment of the invention is defined in Claim 2.

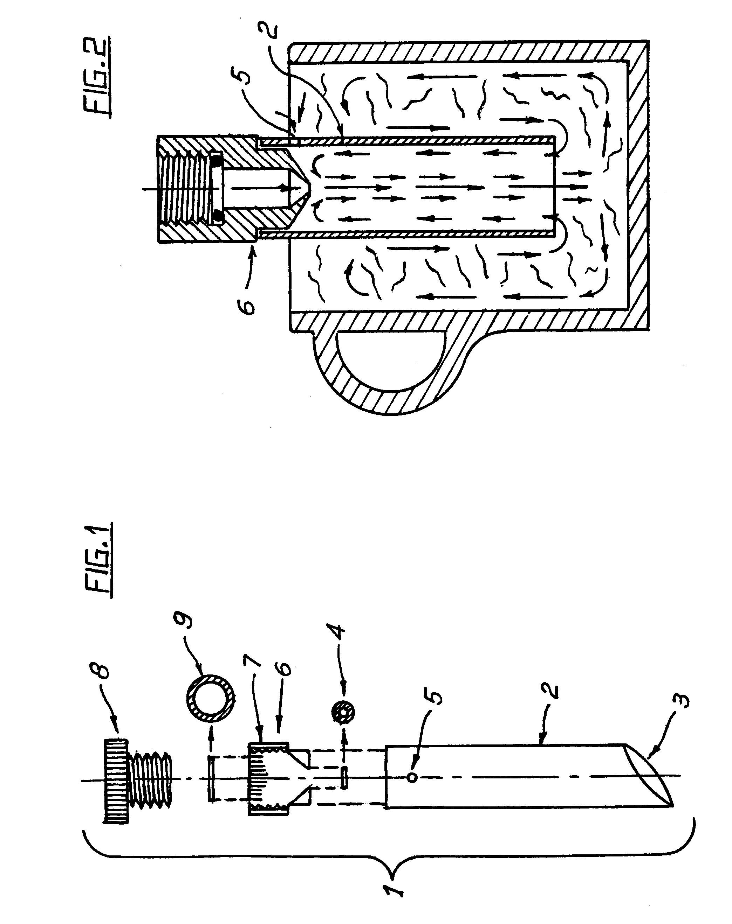

These and other features of this invention and the resulting advantages it affords will be clear from the following detailed description of one of its preferred embodiments, given only by way of not limiting example, taken in conjunction with the annexed drawings in which : Fig. 1 is a explosion cross section view of a device according to this invention showing particularly its essential component parts.

Fig. 2 shows a functional scheme of this device in operation.

With reference to the figures of the drawing, in particular and firstly to Fig. 1 as to the general construction features, a device 1 according to the invention comprises a tube 2, called "turbulence tube", of a suitable diameter and length, said tube being open at its lower part 3 which may be cut along a horizontal or inclined plane or yet in other ways. A small calibrated hole 5, for external air intake is provided in the upper portion of the turbulence tube 2 at the oulet of nozzle 4.

Again at the top part of the turbulence tube a securing block 6 is located, the function of which is to direct the steam under pressure to the nozzle or, possibly toward a calibrated orifice. The top part of the securing block is provided with threads 7 the pitch of which corresponds to the pitch of the steam lance to which the device is to be connected.

By the application of assembly formed by a ring nut 8 and an 0 ring 9, the same device can be utilized for household type machines having steam lances of a smaller diameter than the lance of professional machines.

Naturally, because of the simplicity of construction of this device, the securing block thread may have a pitch corresponding to the pitch of the household type coffee machine to which it is to be connected, or again the ring nut and the sealing O-ring can secure the device to the steam nozzles of professional type coffee machines. It is clear that the threading of the securing block may be either male or female.

The function of said securing blocks is also to support the turbulence tube and this lance may be compled by welding, threading, fitting on the block or it may be fabricated integral with the block.

Fig. 2 shows the operation of the device which may be described generally as follows :

By immersing the device into a liquid, for example, milk or another type of liquid, the liquid level inside turbulence tube 2, due to calibrated orifice 5, is equal to the external level of the liquid surrounding said tube. When the steam under pressure, in passing through nozzle 4, (see fig. 1) urges the liquid downward, a vacuum is created which due to the fact that it cannot vent from the top part of the turbulence tube since this is plugged by the securing block 6, creates a turbulence such as to permit the liquid to rise along the turbulence tube, whilst at the central or inner part of the turbulence tube said liquid is forcefully expelled by the energy of the steam under pressure. Said forced turbulence occurring inside the turbulence tube does not allow the steam to escape in the form of bubbles, hence to disperse part of the heat, but compels the steam to rotate together with the liquid, yielding its heat to the liquid itself.

The entire procedure above described, aimed to heating only, is obtained by keeping immersed also the calibrated orifice, thereby creating a closed loop rotation of the steam and the liquid by virtue of the steam pressure, and through such rotation the steam yields all of its heat to the liquid to be heated.

Should it be desired, in addition to heating the liquid, also to emulsify, whip or thicken it,depending on the type of liquid, the calibrated orifice should be maintained outside the level of the liquid to be treated, and in this way, by aspirating air from the exterior, this air, aspirated through the orifice, will be mixed with the liquid and the steam inside the turbulence tube, thereby causing an increase of the volume of the liquid, causing it to emulsify and/or thicken.

Of course, the invention is not to be considered limited to the embodiment described only by way of example, but may be amply modified and varied, mainly as to construction details, and to render it suitable to meet particular requirements on specifications arising out of actual practice, without however departing from the scope of the invention as claimed in the accompanying claims.

## Claims

1. Apparatus apt to heat, emulsify, whip and thicken liquids of various types, particularly milk, chocolate, punch and the like, including a turbulence tube (2) to be immersed in the liquid to be treated, the wall of which is provided with a passage (5) through which air is sucked; a securing block (6) to be hermetically mounted on the top of said turbulence tube (2) and terminating at its lower portion with a calibrated hole (4), said block (6) being able to be coupled to a source of steam by means of coupling means (8); characterized in that the passage (5) is a calibrated hole arranged approximately at the same level, and preferably at a level slightly higher than the level of the calibrated hole (4) from which the steam is ejected, the tube (2) surrounding the steam block (6) and extending downwardly from said securing block (6) for a substantial extent in order to form a mixing chamber which terminates at its lower part with a fully free passage (3) of the same diameter as the inner diameter of the tube (2).

2. Apparatus according to clam 1, characterized in that the lower end of said turbulence tube (2) is plane, slanted or wave-shaped.

## Revendications

1. Appareil destiné à chauffer, émulsionner, faire mousser et épaissir des liquides, de types différents, en particulier du lait, du chocolat, du punch et similaires, comprenant :
   - un tube de turbulence (2) destiné à être immergé dans le liquide à être traité, la paroi du tube étant pourvue d'un passage (5) par lequel de l'air est aspiré, et
   - un bloc de fixation (6) destiné à être monté de façon hermétique sur la partie supérieure dudit tube de turbulence (2) et se terminant, à sa partie inférieure, par un orifice calibré (4), ledit bloc (6) pouvant être accouplé à une source de vapeur d'eau par l'intermédiaire de moyens d'accouplement (8),
   
   caractérisé en ce que le passage (5) est un trou calibré disposé à peu près au même niveau que l'orifice calibré (4) à partir duquel la vapeur d'eau est éjectée, et de préférence légèrement supérieur au niveau de cet orifice calibré, le tube (2) entourant le bloc de fixation (6) et s étendant à partir de ce dernier vers le bas sur une étendue notable de façon à former une chambre de mélange qui débouche à sa partie inférieure par un passage totalement libre (3) de même diamètre que le diamètre intérieur du tube 2.

2. Appareil suivant la revendication 1, caractérisé en ce que l'extrémité inférieure du tube de turbulence (2) est plane, biseautée ou ondulée.

## Patentansprüche

1. Vorrichtung zum Erwärmen, Emulgieren, Aufschäumen und Eindicken von verschiedenartigen Flüssigkeiten, insbesondere von Milch, Schokolade, Punsch u.dgl., mit einem Turbulenzrohr(2) zum Eintauchen in die zu behandelnde Flüssigkeit, dessen Wand mit einer Öffnung (5) versehen ist, durch welche Luft eingesaugt wird, sowie mit einem Abschlußkörper (6) zum hermetischen Anbringen am oberen Ende des Turbulenzrohres (2), der in seinem unteren Teil mit einer kalibrierten Öffnung (4) endet, wobei der Abschlußkörper (6) mit Hilfe von Anschlußmitteln (8) an eine Dampfquelle anschließbar ist, dadurch gekennzeichnet, daß die Öffnung (5) von einer kalibrierten Öffnung gebildet ist, welche ungefähr in derselben Höhe, und vorzugsweise ein wenig höher, wie die Höhe der kalibrierten Öffnung (4), aus der der Dampf ausgestoßen wird, angordnet ist, und daß das Rohr (2) den Dampfkörper (6) umgibt und vom Abschlußkörper (6) sich abwärts um ein wesentliches Ausmaß erstreckt, um eine Mischkammer zu bilden, welche in ihrem unteren Bereich in einem vollkommen freien Durchgang (3) mit dem gleichen Durchmesser wie der Innendurchmesser des Rohres (2) endet.

2. Vorrichtung nach Anspruch 1, dadurch gekennzeichnet, daß das untere Ende des Turbulenzrohres (2) eben, abgeschrägt oder wellenförmig ausgebildet ist.

FIG.2

FIG.1